# EUROPÄISCHE PATENTSCHRIFT

(11) **EP 0 675 167 B1**
(45) Veröffentlichungstag und Bekanntmachung des Hinweises auf die Patenterteilung: **13.01.1999**
(21) Anmeldenummer: 95103799.3
(22) Anmeldetag: 16.03.1995
(51) Int. Cl.: C08L 77/12, C08L 77/00, C08J 5/18

(54) **Polymermischung und daraus hergestellte Folien**
Polymer composition and films thereof
Composition de polymère et pellicules à partir de celle-ci

(30) Priorität: 29.03.1994 DE 4410921
(43) Veröffentlichungstag der Anmeldung: 04.10.1995
(73) Patentinhaber: Elf Atochem Deutschland GmbH, 40474 Düsseldorf (DE)
(72) Erfinder: Steenblock, Roland, D-53340 Meckenheim (DE); Kock, Norbert, D-53343 Wachtberg (DE); Fiedler, Detlef, D-53113 Bonn (DE)
(74) Vertreter: Türk, Gille, Hrabal

(56) Entgegenhaltungen:
- EP-A- 0 389 998
- EP-A- 0 459 862
- EP-A- 0 476 963
- EP-A- 0 482 833

## Beschreibung

Die Erfindung betrifft eine Polymermischung aus Polyetherblockamiden und einem Poly(ethylen-co-vinylacetat-g-maleinsäureanhydrid)-Polymer und daraus hergestellte Folien. Die Erfindung betrifft ferner die Verwendung dieser Folien zur Herstellung von wasserdichten, wasserdampfdurchlässigen, winddichten textilen Verbundstoffen, Verbandmaterialien und Hygieneartikeln verwendet werden.

Wasserdampfdurchlässige, wasserdichte Folien finden in den verschiedensten Bereichen Verwendung. Man unterscheidet grundsätzlich zwischen porösen und kompakten Folien. Poröse Folien aus gestrecktem mikroporösem Polytetrafluorethylen sind unter der Bezeichnung Goretex^{R} im Handel. Kompakte Folien aus Polyetheresterblock-Copolymeren sind unter der Bezeichnung Sympatex^{R} im Handel. Folien aus Polyetherblockamiden, die eine hohe Wasserdampfdurchlässigkeit besitzen, sind beispielsweise in der EP-A-0 378 015 beschrieben. Aus der EP-A-0 476 963 sind nichtporöse wasserdampfdurchlässige Folien auf der Basis einer Polymermischung aus einem hydrophilen Poly(etherco-amid) bekannt, enthaltend 20 bis 80 Gew.-% Polyethylenglycolblöcke und hydrophobes Polymer, ausgewählt aus folgender Gruppe: a) Blockpoly(ether-co-amid) ohne Polyethylenglycolblöcke; b) Polyamid; c) Polyester oder Polyurethan. Diese Folie besitzt jedoch in vielen Fällen eine nicht ausreichende Festigkeit, worauf auch in der EP-A-0 560 630 hingewiesen wird. Die EP-A-0 560 630 zeigt zur Erreichung höherer Zugfestigkeiten, insbesondere bei der Anwendung der Folien im medizinischen Bereich, den Weg der Co-Laminierung unter Bildung eines Zweischicht-Polymerfilms auf, was jedoch grundsätzlich einen erhöhten technischen Aufwand mit sich bringt. Thermoplastische Elastomerzusammensetzungen auf der Basis von Polyamiden und modifizierten Polyolefinen und die Herstellung von Formteilen, Extrusionsartikeln und Folien daraus sind in der EP-A-0 459 862 beschrieben. Die so hergestellten Folien dienen jedoch insbesondere zur Verklebung bzw. zum Beschichten anderer Materialien. Bevorzugt - und in den Beispielen ausschließlich - werden dort Polyetheresteramide auf der Basis von Polytetramethylenglycol (PTMG) verwendet. Polyetheresteramide dieses Typs sind jedoch für die unten beschriebenen Anforderungen infolge ihrer zu geringen Hydrophilie ungeeignet.

Grundsätzlich soll eine wasserdampfdurchlässige, wasserdichte Folie eine Reihe von unterschiedlichen Anforderungen erfüllen. So soll die Folie ein homogenes Erscheinungsbild bieten und insbesondere keine Stippen aufweisen. Sie soll einen guten textilen Griff zeigen und eine gewisse Weichheit aufweisen. Sie soll winddicht sein und eine hohe Wasserdampfdurchlässigkeit aufweisen. Einerseits soll sie eine hohe Elastizität aufweisen, andererseits bei hoher Dehnung jedoch stabil und fest sein. Für die Anwendung im medizinischen Bereich ist besonders die Dichtheit gegen Bakterien und Mikroben bedeutsam. Ferner soll die Folie waschbeständig sein. Die zur Herstellung der Folie vorgesehene Polymermischung muß sich leicht zu der gewünschten Folie verarbeiten lassen. Weiter soll die Folie sich problemlos mit anderen Materialien wie Textilien zu Verbundwerkstoffen verbinden lassen. Die bekannten oben erwähnten Folien besitzen zwar eine hohe Wasserdampfdurchlässigkeit, haben aber demgegenüber gewisse Nachteile wie z.B. schlechte Verarbeitbarkeit sowohl bei der Folienherstellung als auch bei der Verarbeitung der aus den Folien hergestellten Verbundmaterialien. Die Folie selbst sowie das daraus hergestellte Verbundmaterial zeigt ein störendes Rascheln bzw. Knistern. Die Folien nehmen beträchtliche Mengen an Wasser auf und zeigen eine schlechte Waschbeständigkeit. So erfüllen z. B. aus bekannten Polyetherblockamiden hergestellte Folien mit einer Wasseraufnahmefähigkeit von mehr als 30 Gew.-%, die an wasserdichte, wasserdampfdurchlässige Folien gestellten Anforderungen nur teilweise. Je nach verwendetem Polyetherblockamid ist die hohe Wasserdampfdurchlässigkeit, die angenehme Weichheit, der gute textile Griff und ein nur geringfügiges Rascheln verbunden mit einer Verschlechterung der Verarbeitbarkeit sowie dem Blocken bei der Herstellung der Folie, der Migration von Monomeren bzw. Oligomeren, einer hohen Wasseraufnahme und einer schlechten Waschbeständigkeit der aus den Folien hergestellten Verbundtextilien. Verwendet man Polyetherblockamide mit einer Wasseraufnahmefähigkeit von 10 bis 15 % zur Herstellung von Folien, so zeigen diese zwar eine gute Verarbeitbarkeit, eine hohe Wasseraufnahme und eine gute Waschbeständigkeit im Verbund. Sie sind jedoch nur begrenzt wasserdampfdurchlässig, der textile Griff und die Weichheit sind unbefriedigend, und die Folien zeigen ein verstärktes Rascheln und Knistern. Aus Gemischen von Polyetherblockamiden mit unterschiedlicher Wasseraufnahmefähigkeit (Polymerblends) hergestellte Folien zeigen demgegenüber verbesserte Eigenschaften, die schlechte Verarbeitbarkeit bleibt jedoch erhalten.

Der Erfindung liegt dementsprechend die Aufgabe zugrunde, eine Polymermischung und eine daraus hergestellte Folie zur Verfügung zu stellen, die die oben erwähnten Anforderungen erfüllt und die Nachteile der bekannten Folien weitgehend überwindet.

Diese Aufgabe wird überraschend erfindungsgemäß durch eine Polymermischung gelöst, die dadurch gekennzeichnet ist, daß sie
(A) 50 bis 85 Gew.-% eines Polyetherblockamids aus 30 bis 60 Gew.-% Polyamid-12-, Polyamid-11- und/oder Polyamid-12,12-Blöcken und 70 bis 40 Gew.-% Polyethylenglycol-Blöcken,
(B) 10 bis 40 Gew.-% eines Polyetherblockamids aus 65 bis 85 Gew.-% Polyamid-12-, Polyamid-11- und/oder Polyamid-12,12-Blöcken und 35 bis 15 Gew.-% Polyethylenglycol-Blöcken, und
(C) 5 bis 40 Gew.-% eines Poly(ethylen-co-vinylacetat-g-maleinsäureanhydrid)-Polymers aus mindestens 75 Gew.-% Ethylen, mindestens 5 Gew.-% Vinylacetat und 0,1 bis 2 Gew.-% Maleinsäureanhydrid
umfaßt, wobei sich die Gew.-%-Angaben der Bestandteile (A), (B) und (C) auf die Gesamtmenge der Polymermischung beziehen.

Bevorzugt umfaßt die Polymermischung 65 bis 75 Gew.-% des Polyetherblockamids (A) 15 bis 25 Gew. des Polyetherblockamids (B) und 5 bis 15 Gew.-% des Poly(ethylen-co-vinylacetat-g-malein-säureanhydrid)-Polymers (C), wobei sich die Gew.-%-Angaben der Bestandteile (A), (B) und (C) auf die Gesamtmenge der Polymermischung beziehen.

Die im erfindungsgemäßen Polymergemisch verwendeten Polyetherblockamide sind an sich bekannte Polykondensationsprodukte, die durch Copolykondensation aus Polyamid-12-, Polyamid-11- und/oder Polyamid-12,12-Sequenzen mit reaktiven Endgruppen und Polyethylenglycolsequenzen mit reaktiven Endgruppen hergestellt werden können. Zweckmäßig werden dicarboxylterminierte Polyamid-12-, Polyamid-11- und/oder Polyamid-12,12-Sequenzen mit Polyethylenglycoldiolen umgesetzt. Die Herstellung solcher Polyetherblockamide ist beispielsweise in der eingangs erwähnten EP-A-0 378 015 oder den französischen Patentschriften FR 2 273 021 und FR 2 401 947 beschrieben. Die erfindungsgemäß verwendbaren Polyetherblockamide (A) und (B) unterscheiden sich durch das Gewichtsverhältnis der Polyamid-Blöcke und der Polyethylenglycolblöcke. Die Änderung dieses Gewichtsverhältnisses erfolgt über die Einstellung der Molekulargewichtszahlenmittel der Polyamid-Blöcke und/oder der Polyethylenglycolblöcke. Wenn in den Polyetherblockamiden (A) und (B) die Polyethylenglycolblöcke ungefähr den gleichen Wert aufweisen, was nach einer Ausführungsform möglich ist, müssen zur Erzielung der gewünschten Gewichtsverhältnisse die Molekulargewichte der Polyamid-Blöcke angepaßt werden. Das Polyetherblockamid (A) besteht bevorzugt aus 45 bis 55 Gew.-% Polyamid-12-, Polyamid-11- und/oder Polyamid-12,12-Blöcken und 55 bis 45 Gew.-% Polyethylenglycol-Blöcken. Das Polyetherblockamid (B) besteht bevorzugt aus 70 bis 80 Gew.-% Polyamid-12-Blöcken und 30 bis 20 Gew.-% Polyethylenglycol-Blöcken. Das Molekulargewichts-Zahlenmittel der Polyamid-12-, Polyamid-11- und/oder Polyamid-12,12-Blöcke beträgt zweckmäßig 500 bis 10000, bevorzugt 600 bis 5000. Das Molekulargewichts-Zahlenmittel der PolyethylenglycolBlöcke beträgt zweckmäßig zwischen 200 und 6000, bevorzugt 600 bis 3000 und besonders bevorzugt etwa 1500. Bevorzugt werden als Polyetherblockamide (A) und (B) solche auf der Basis von Polyamid-12 und Polyethylenglycol verwendet.

Das unterschiedliche Gewichtsverhältnis von Polyamid-12-, Polyamid-11- und/oder Polyamid-12,12-Blöcken (sogenannte Hartsegmente) zu Polyethylenglycolblock (sogenanntes Weichsegment) in den Polyetherblockamiden (A) und (B) bedingt ihre unterschiedliche Shore-Härten. Das Polyetherblockamide (A) weist bevorzugt eine Shore-Härte von 35 D bis 45 D auf. Das Polyetherblockamide (B) weist bevorzugt eine Shore-Härte von 50 D bis 65 D auf.

Bei dem Poly(ethylen-co-vinylacetat-g-maleinsäure-anhydrid)-Polymer handelt es sich um ein an sich bekanntes statistisches oder Blockcopolymer aus Ethylen und Vinylacetat als Pfropfsubstrat, auf das Maleinsäure aufgepfropft wurde. Es besteht aus mindestens 75 Gew.-% Ethylen, mindestens 5 Gew.-% Vinylacetat und 0,1 bis 2 Gew.-% Maleinsäureanhydrid und bevorzugt aus aus mindestens 80 Gew.-% Ethylen, mindestens 10 Gew.-% Vinylacetat und 0,2 bis 0,5 Gew.-% Maleinsäureanhydrid.

Die erfindunggemäße Polymermischung kann gegebenenfalls unter Zusatz weiterer folien- und extrusionstechnischer Zusätze wie Farbstoffe, Gleitmittel, Pigmente usw., die im Stand der Technik bekannt sind, zu wasserdampfdurchlässigen, wasserdichten Filmen verarbeitet werden.

Die erfindungsgemäße Polymermischung wird dazu zweckmäßig durch Mischen der abgewogenen Anteile der drei Bestandteile in einem Mischer hergestellt und dann in Form einer rieselfähigen Mischung (Dry blend) bereitgestellt. Die Herstellung der erfindungsgemäßen Folien erfolgt vorzugsweise durch Extrudieren. Die Extrusion kann sowohl im Schlauchfolien- als auch im Flachfolienextrusionsverfahren durchgeführt werden. Zweckmäßig wird die Folie zusammen mit einer Trägerfolie durch das Co-extrusionsschlauchfolien-Verfahren hergestellt, wie es z.B. in der EP 0 024 740 beschrieben ist.

Die so hergestellten Folien besitzen zweckmäßig eine Dicke von weniger als 150 µm, bevorzugt zwischen 5 und 80 µm und noch bevorzugter zwischen 5 und 30 µm.

Die erfindungsgemäß hergestellten Folien besitzen beispielsweise bei einer Dicke von 15 µm zweckmäßig eine Wasserdampfdurchlässigkeit nach DIN 53122 von mindestens 4000, bevorzugt von mindestens 4500 und noch bevorzugter von 5000 g/m²/24h. Das Erreichen einer solch hohen Wasserdampfdurchlässigkeit erwies sich als außerordentlich überraschend, da beim Mischen des relativ hydrophilen Polyetherblockamid (A) mit dem relativ hydrophoben Polyetherblockamid (B) und dem hydrophoben Terpolymer (C) eine stärkere, proportionale Absenkung der Wasserdampfdurchlässigkeit erwartet worden war. Es zeigte sich jedoch, daß die Wasserdampfdurchlässigkeit den gleich hohen Wert des Polyetherblockamids (A) beibehält und sogar übertrifft, bei gleichzeitiger Verbesserung der mechanischen Eigenschaften und der Verarbeitbarkeit der Folie. Dies stellt einen unerwarteten synergistischen Effekt dar, der aus dem Mischen der Bestandteile (A), (B) und (C) resultiert.

Mit den aus der erfindungsgemäß zur Verfügung gestellten Polymermischung hergestellten Folien aus den Polyetherblockamiden (A) und (B) und dem Poly(ethylen-covinylacetat-g-maleinsäureanhydrid)-Polymer werden somit die eingangs genannten Nachteile überraschend überwunden und die Anforderungen an eine wasserdampfdurchlässige, wasserdichte Folie weitgehend erfüllt.

Aufgrund der vorstehend beschriebenen Eigenschaften der erfindungsgemäßen Folien eignen diese sich insbesondere zur Herstellung von textilen Verbundstoffen, Verbandmaterialien und Hygieneartikeln wie Windeln, atmungsaktivem Verbandmaterial wie Pflaster, medizinischer Bekleidung einschließlich Handschuhen und Gesichtsmasken (Mundschutz). Beispiele für Verbundmaterialien sind solche für wasserdichte, winddichte und atmungsaktive Bekleidungsstücke, wie Berufsbekleidung, Arbeitsschutzbekleidung, Freizeitbekleidung wie Bergsteigerbekleidung, Bekleidung für maritime Zwecke, für Schuhe und Freizeitartikel wie Zelte, Rucksäcke und Fahrradpacktaschen.

Die vorstehend beschriebene Erfindung wird durch die nachfolgenden Beispiele verdeutlicht.

### Beispiel 1:

70 Gew.-Teile Pebax^{R} MX 1074 (Pebax ist ein Warenzeichen der Firma Elf Atochem), ein Polyetherblockamid der allgemeinen Formel 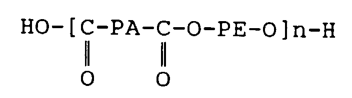 basierend auf PA-12 als Hartsegment und PEG als Weichsegment mit einer Shorehärte D von etwa 39 (gemessen nach ASTM D 2240) und einem Schmelzindex von etwa 10 g/10 min. bei 235°C/kg (ASTM D 1238) als Polyetherblockamid (A),
20 Gew.-Teile Pebax^{R} MX 1041 (Pebax ist ein Warenzeichen der Firma Elf Atochem), ein Polyetherblockamid der allgemeinen Formel 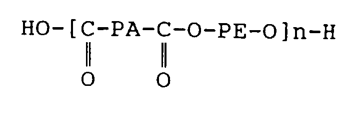 basierend auf PA-12 als Hartsegment und PEG als Weichsegment mit mit einer Shorehärte D von etwa 56 (ASTM D 22 40) und einem Schmelzindex von etwa 10 g/10 Minuten bei 235°C/kg (ASTM D 1238) als Polyetherblockamid (B) und
10 Gew.-Teile Orevac^{R} 9307 (Orevac ist ein Warenzeichen der Elf Atochem), ein Poly(ethylen-co-vinylacetat-g-maleinsäureanhydrid)-Polymer aus etwa 14 Gew.-% Vinylacetat und etwa 85,7 Gew.% Gew.-% Ethylen als Copolymer, auf das etwa 0,3 Gew.-% Maleinsäureanhydrid aufgepfopft sind, mit einem Schmelzindex von etwa 6 g/10 Minuten und einer Shore-Härte D von etwa 33 (ASTM D 2240) als Komponente (C) wurden in Granulatform gemischt und wie folgt extrudiert:

An einem Spritzkopf mit zwei konzentrischen Ringschlitzen von 150 mm werden zwei Extruder mit innen ca. 17 kg/h und außen mit ca. 6,5 kg/h Förderleistung angeschlossen. Innen wurde, als Trägermaterial, LDPE (Low Density Polyethylen) und außen ein Dryblend der Polymermischung gefördert.
Die Temperatur im Spritzkopf betrug 174°C; die Breite der zweimal geschlitzten Folie 450 mm. Die Wandstärken der erzeugten Folien betrugen

| | |
|---|---|
| Trägerfolie | 40 µm |
| Folie gem. der Erfindung | 15 µm |

Die erfindungsgemäße Folie läßt sich leicht von der Trägerfolie abziehen.
Die hergestellte erfindungsgemäße 15-µm-Folie hat eine Wasserdampfdurchlässigkeit von 5209 g/m²/24h (Klima 38 °C/90 %, DIN 53122). Sie besitzt eine ausgezeichnete Haftung zu handelsüblichen Laminierklebern und Reaktionsschäumen, die deutlich über der von bekannten Folien wie solchen auf Basis Polybutylenterephthalat als Hartsegment und Polyethylenglycol als Weichsegment liegt. Die erfindungsgemäß hergestellte Folie ist klar, transparent, streifenfrei, ohne Stippen oder Schlieren und frei von Knistern und Blocken.

### Vergleichsbeispiel 1

An einem Spritzkopf mit zwei konzentrischen Ringschlitzen von 150 mm werden zwei Extruder mit innen ca. 17 kg/h und außen mit ca. 6,5 kg/h Förderleistung angeschlossen. Innen wurde, als Trägermaterial, LDPE und außen nur das Polyetherblockamid (A) (Pebax^{R} MX 1074) aus Beispiel 1 gefördert.
Die Temperatur im Spritzkopf betrug 174°C; die Breite der zweimal geschlitzten Folie 450 mm. Die Wandstärken der erzeugten Folien betrugen:

| | |
|---|---|
| Trägerfolie | 40 µm |
| Vergleichsfolie | 15 µm |

Die Vergleichsfolie zeigt nach dem Trennen von der Trägerfolie starke Einrolleffekte. Nach Aufspulen der Vergleichsfolien und einigen Tagen Lagerung läßt sie sich wegen Lagenverklebung nicht mehr abrollen.
Die so hergestellte Vergleichs folie hat eine Wasserdampfdurchlässigkeit von 4914 g/m²/24h (Klima 38 °C/90 %, DIN 53122). Die Folie fühlt sich hart an. Sie hat ein sehr starkes Blockverhalten, mit einem Rolleffekt zur Trägerfolien-Seite hin. Nach einiger Zeit zeigen sich Ausblühungen.

### Vergleichsbeispiel 2

| | |
|---|---|
| 80 Gew.-Teile | Polyetherblockamid (A) (Pebax^{R} MX 1074) aus Beispiel 1 |
| 20 Gew.-Teile | Poly(ethylen-co-vinylacetat-g-maleinsäureanhydrid)-Polymer (C) (Orevac^{R} 9307) aus Beispiel (1) |

wurden wie folgt extrudiert:
An einem Spritzkopf mit zwei konzentrischen Ringschlitzen
von 150 mm werden zwei Extruder mit innen ca. 17 kg/h und außen mit ca. 6,5 kg/h Förderleistung angeschlossen. Innen wurde, als Trägermaterial, LDPE und außen ein Dryblend der o.g. Polymermischung gefördert. Die Temperatur im Spritzkopf betrug 174°C; die Breite der zweimal geschlitzten Folie 450 mm. Die Wandstärken der erzeugten Folien betrugen:

| | |
|---|---|
| Trägerfolie | 40 µm |
| Vergleichsfolie | 15 µm |

Die Mantelfolie läßt sich leicht von ihrer Trägerfolie abziehen.
Die so hergestellte Folie hat eine Wasserdampfdurchlässigkeit von 5193 g/m²/24h (Klima 38 °C/90 %, DIN 53122); sie zeigte zwar ein verringertes Blockverhalten, verliert aber ihre Transparenz, wird inhomogen und streifig.

## Patentansprüche

1. Polymermischung, dadurch gekennzeichnet, daß sie
(A) 50 bis 85 Gew.-% eines Polyetherblockamids aus 30 bis 60 Gew.-% Polyamid-12-, Polyamid-11- und/oder Polyamid-12,12-Blöcken und 70 bis 40 Gew.-% Polyethylenglycol-Blöcken,
(B) 10 bis 40 Gew.-% eines Polyetherblockamids aus 65 bis 85 Gew.-% Polyamid-12-, Polyamid-11- und/oder Polyamid-12,12-Blöcken und 35 bis 15 Gew.-% Polyethylenglycol-Blöcken, und
(C) 5 bis 40 Gew.-% eines Poly(ethylen-co-vinylacetat-g-maleinsäureanhydrid)-Polymers aus mindestens 75 Gew.-% Ethylen, mindestens 5 Gew.-% Vinylacetat und 0,1 bis 2 Gew.-% Maleinsäureanhydrid
umfaßt, wobei sich die Gew.-%-Angaben der Bestandteile (A), (B) und (C) auf die Gesamtmenge der Polymermischung beziehen.

2. Polymermischung nach Anspruch 1, dadurch gekennzeichnet, daß sie 65 bis 75 Gew.-% des Polyetherblockamids (A) 15 bis 25 Gew. des Polyetherblockamids (B) und 5 bis 15 Gew.-% des Poly(ethylen-co-vinylacetat-g-maleinsäureanhydrid)-Polymers (C) umfaßt, wobei sich die Gew.-%-Angaben der Bestandteile (A), (B) und (C) auf die Gesamtmenge der Polymermischung beziehen.

3. Polymermischung nach Anspruch 1 oder 2, dadurch gekennzeichnet, daß das Polyetherblockamid (A), aus
45 bis 55 Gew.-% Polyamid-12-, Polyamid-11- und/oder Polyamid-12,12-Blöcken und
45 bis 55 Gew.-% Polyethylenglycol-Blöcken besteht, und das Polyetherblockamid (B), aus
70 bis 80 Gew.-% Polyamid-12-, Polyamid-11- und/oder Polyamid-12,12-Blöcken und
30 bis 20 Gew.-% Polyethylenglycol-Blöcken besteht.

4. Polymermischung nach einem oder mehreren der Ansprüche 1 bis 3, dadurch gekennzeichnet, daß die Polyetherblockamide (A) und (B) aus Polyamid-12-Blöcken und Polyethylenglycol-Blöcken bestehen.

5. Polymermischung nach einem oder mehreren der Ansprüche 1 bis 4, dadurch gekennzeichnet, daß das Poly-(ethylen-co-vinylacetat-g-maleinsäureanhydrid)-Polymer aus mindestens 80 Gew.-% Ethylen, mindestens 10 Gew.-% Vinylacetat und 0,2 bis 0,5 Gew.-% Maleinsäureanhydrid besteht.

6. Polymermischung nach einem oder mehreren der Ansprüche 1 bis 5, dadurch gekennzeichnet, daß das Polyetherblockamid (A) eine Shore-Härte von 35 D bis 45 D und das Polyetherblockamid (B) eine Shore-Härte von 50 D bis 65 D aufweist.

7. Verwendung der Polymermischung nach einem oder mehreren der Ansprüche 1 bis 6 zur Herstellung von wasserdampfdurchlässigen, wasserdichten Filmen.

8. Wasserdampfdurchlässiger, wasserdichter Film, dadurch gekennzeichnet, daß er aus der Polymermischung nach einem oder mehreren der Ansprüche 1 bis 6 hergestellt ist.

9. Film nach Anspruch 8, dadurch gekennzeichnet, daß er durch Extrudieren einer Polymermischung nach einem oder mehreren der Ansprüche 1 bis 5 hergestellt ist.

10. Film nach Ansprüchen 8 oder 9, dadurch gekennzeichnet, daß er eine Dicke von weniger als 150 µm, bevorzugt zwischen 5 und 80 µm und noch bevorzugter zwischen 5 und 30 µm aufweist.

11. Verwendung des Films nach einem oder mehreren der Ansprüche 8 bis 10 zur Herstellung von wasserdichten, wasserdampfdurchlässigen, winddichten textilen Verbundstoffen, Verbandmaterialien und Hygieneartikeln.

## Claims

1. Polymer blend, characterized in that it comprises
(A) 50 to 85% by weight of a polyether block amide composed of 30 to 60% by weight of polyamide-12, polyamide-11 and/or polyamide-12,12 blocks and 70 to 40% by weight of polyethylene glycol blocks,
(B) 10 to 40% by weight of a polyether block amide composed of 65 to 85% by weight of polyamide-12, polyamide-11 and/or polyamide-12,12 blocks and 35 to 15% by weight of polyethylene glycol blocks, and
(C) 5 to 40% by weight of a poly(ethylene-co-vinyl acetate-g-maleic anhydride) polymer composed of at least 75% by weight of ethylene, at least 5% by weight of vinyl acetate and 0.1 to 2% by weight of maleic anhydride,
the weight %ages of the constituents (A), (B) and (C) being based on the total amount of the polymer blend.

2. Polymer blend according to Claim 1, characterized in that it comprises 65 to 75% by weight of the polyether block amide (A), 15 to 25% by weight of the polyether block amide (B) and 5 to 15% by weight of the poly(ethylene-co-vinyl acetate-g-maleic anhydride) polymer (C), the weight %ages of the constituents (A), (B) and (C) being based on the total amount of the polymer blend.

3. Polymer blend according to Claim 1 or 2, characterized in that the polyether block amide (A) consists of 45 to 55% by weight of polyamide-12, polyamide-11 and/or polyamide-12,12 blocks and
45 to 55% by weight of polyethylene glycol blocks, and the polyether block amide (B) consists of
70 to 80% by weight of polyamide-12, polyamide-11 and/or polyamide-12,12 blocks and
30 to 20% by weight of polyethylene glycol blocks.

4. Polymer blend according to one or more of Claims 1 to 3, characterized in that the polyether block amides (A) and (B) consist of polyamide-12 blocks and polyethylene glycol blocks.

5. Polymer blend according to one or more of Claims 1 to 4, characterized in that the poly(ethylene-co-vinyl acetate-g-maleic anhydride) polymer consists of at least 80% by weight of ethylene, at least 10% by weight of vinyl acetate and 0.2 to 0.5% by weight of maleic anhydride.

6. Polymer blend according to one or more of Claims 1 to 5, characterized in that the polyether block amide (A) has a Shore hardness of 35 D to 45 D and the polyether block amide (B) has a Shore hardness of 50 D to 65 D.

7. Use of the polymer blend according to one or more of Claims 1 to 6 for producing water-vapour-pervious, watertight films.

8. Water-vapour-pervious, watertight film, characterized in that it has been produced from the polymer blend according to one or more of Claims 1 to 6.

9. Film according to Claim 8, characterized in that it has been produced by extruding a polymer blend according to one or more of Claims 1 to 5.

10. Film according to Claims 8 or 9, characterized in that it has a thickness of less than 150 µm, preferably between 5 and 80 µm, more preferably between 5 and 30 µm.

11. Use of the film according to one or more of Claims 8 to 10 for producing watertight, water-vapour-pervious, windproof textile composite materials, bandage materials and hygiene articles.

## Revendications

1. Mélange de polymères, caractérisé en ce qu'il comprend
(A) de 50 à 85 % en poids d'un polyéther-amide séquencé composé de 30 à 60 % en poids de séquences de polyamide-12, polyamide-11 et/ou polyamide-12,12 et de 70 à 40 % en poids de séquences de polyéthylèneglycol,
(B) de 10 à 40 % en poids d'un polyéther-amide séquencé composé de 65 à 85 % en poids de séquences de polyamide-12, polyamide-11 et/ou polyamide-12,12 et de 35 à 15 % en poids de séquences de polyéthylèneglycol, et
(C) de 5 à 40 % en poids d'un polymère poly(éthylène-co-acétate de vinyle-g-anhydride maléique) composé d'au moins 75 % en poids d'éthylène, d'au moins 5 % en poids d'acétate de vinyle et de 0,1 à 2 % en poids d'anhydride maléique.
les pourcentages en poids des composants (A), (B) et (C) se rapportant à la quantité totale du mélange de polymères.

2. Mélange de polymères selon la revendication 1, caractérisé en ce qu'il comprend de 65 à 75 % en poids du polyéther-amide séquencé (A), de 15 à 25 % en poids du polyéther-amide séquencé (B) et de 5 à 15 % en poids du polymère poly(ethylène-co-acétate de vinyle-g-anhydride maléique) (C), les pourcentages en poids des composants (A), (B) et (C) se rapportant à la quantité totale du mélange de polymères.

3. Mélange de polymères selon la revendication 1 ou 2, caractérisé en ce que le polyéther-amide séquence (A) est constitué
de 45 à 55 % en poids de séquences de polyamide-12, polyamide-11 et/ou polyamide-12,12 et
de 45 à 55 % en poids de séquences de polyéthylèneglycol, et le polyéther-amide séquencé (B) est constitué de 70 à 80 % en poids de séquences de polyamide-12, polyamide-11 et/ou polyamide-12,12 et
de 30 à 20 % en poids de séquences de polyéthylèneglycol.

4. Mélange de polymères selon une ou plusieurs des revendications 1 à 3, caractérisé en ce que les polyétheramides séquencés (A) et (B) sont constitués de séquences de polyamide-12 et de séquences de polyéthylèneglycol.

5. Mélange de polymères selon une ou plusieurs des revendications 1 à 4, caractérisé en ce que le polymère poly(éthylène-co-acétate de vinyle-g-anhydride maléique) est constitué d'au moins 80 % en poids d'éthylène, d'au moins 10 % en poids d'acétate de vinyle et de 0,2 à 0,5 % en poids d'anhydride maléique.

6. Mélange de polymères selon une ou plusieurs des revendications 1 à 5, caractérisé en ce que le polyéther-amide séquencé (A) présente une dureté Shore de 35 D à 45 D et le polyéther-amide séquence (B) présente une dureté Shore de 50 D à 65 D.

7. Utilisation du mélange de polymères selon une ou plusieurs des revendications 1 à 6, pour la fabrication d'une pellicule imperméable à l'eau, perméable à la vapeur d'eau.

8. Pellicule imperméable à l'eau, perméable à la vapeur d'eau, caractérisée en ce qu'elle est fabriquée à partir du mélange de polymères selon une ou plusieurs des revendications 1 à 6.

9. Pellicule selon la revendication 8, caractérisée en ce qu'elle est obtenue par extrusion d'un mélange de polymères selon une ou plusieurs des revendications 1 à 5.

10. Pellicule selon la revendication 8 ou 9, caractérisée en ce qu'elle présente une épaisseur de moins de 150 µm, de préférence comprise entre 5 et 80 µm et de façon particulièrement préférée entre 5 et 30 µm.

11. Utilisation de la pellicule selon une ou plusieurs des revendications 8 à 10, pour la fabrication de composites textiles, pansements et articles d'hygiène, imperméables à l'eau, perméables à la vapeur d'eau et antivent.
